# EUROPÄISCHE PATENTSCHRIFT

(11) **EP 1 526 039 B1**
(45) Veröffentlichungstag und Bekanntmachung des Hinweises auf die Patenterteilung: **14.02.2007**
(21) Anmeldenummer: 04023757.0
(22) Anmeldetag: 06.10.2004
(51) Int. Cl.: B60R 5/04

(54) **Laderaumabdeckung mit Verzurrmitteln**
Load compartment cover with tying means
Couverture de soute de baggage et moyens d'arrimage

(30) Priorität: 24.10.2003 DE 10349936
(43) Veröffentlichungstag der Anmeldung: 27.04.2005
(60) Teilanmeldung: 06017120.4
(73) Patentinhaber: BOS GmbH & Co. KG, 73760 Ostfildern (DE)
(72) Erfinder: Hintennach, Markus, 73666 Baltmannsweiler (DE); Swientek, Manfred, 73760 Ostfildern (DE); Müller, Kerstin, 72555 Metzingen (DE)
(74) Vertreter: Rüger, Barthelt & Abel Patentanwälte

(56) Entgegenhaltungen:
- EP-A- 1 398 220
- WO-A-02/02372
- DE-A1- 10 047 542
- US-A- 5 685 592

## Beschreibung

Bei den früheren Kraftfahrzeugen waren die Lade- oder Kofferräume von PKWs üblicherweise nicht ausgekleidet, weshalb genügend Ecken und Nischen vorhanden waren, in denen kleineres Ladegut verstaut werden konnte. Bei den neueren Fahrzeugen bemühen sich die Designer auch um den Lade- und Kofferraum. Er ist üblicherweise heute mit einem teppichbodenähnlichen Belag ausgekleidet. Der Boden ist weitgehend eben und auch im Seitenbereich fehlen taschenförmige Vertiefungen. Die Folge ist, dass kleines Ladegut, das den Ladeboden nicht vollständig ausfüllt, beim Anfahren und Bremsen und auch beim Kurvenfahren auf dem Ladeboden beliebig verrutscht.

Um dem entgegenzuwirken ist es aus der Praxis bekannt, im Boden des Fahrzeugs leiternähnliche Schienen zu verlegen, die als Verankerungsmittel dienen sollen. In die Sprossen der leiternähnlichen Schienen können Verzurrgurte mit Haken eingehängt werden.

Mit einer solchen Verankerungseinrichtung ist es aber jedoch nicht möglich, nicht formstabiles Ladegut wie beispielsweise Einkaufstaschen oder mit Lebensmittel gefüllte Plastiktüten zu fixieren.

Eine Aufteilung des Laderaums in ein kleineres Kompartment ist bei ausschließlich am Boden befindlichen Schienen nicht durchführbar.

Darüber hinaus ist es für Kombi-PKW bekannt, die Ladebucht durch eine Plane nach oben hin optisch zu verschließen. Solche Laderaumabdeckungen weisen eine Rollobahn auf, die in einer Kassette an der Rückseite der Rücksitzlehne zu verstauen ist. Hierzu befindet sich in der Kassette eine drehbar gelagerte Wickelwelle, an der die Rollobahn mti einer Kante befestigt.

Zum Aufspannen und Führen der Rollobahn sind üblicherweise unterhalb der Seitenfenster Führungsschienen vorgesehen.

Bei einer anderen Ausführungsform von Laderaumabdeckungen wird die Plane durch eine Reihe von Spriegeln unterstützt, die ebenfalls in seitlichen Führungsschienen unterhalb der Seitenfenster geführt sind.

Ohne weitere Erläuterung zeigt die DE 100 47 542 A1 eine Figur, die zwei Führungsnuten übereinander erkennen lässt, die an einer Laderaumseitenwand ausgebildet sind. Die eine Führungsnut soll dazu vorgesehen sein, die Endstücke eines Auszugsprofils einer Laderraumabdeckung zu führen. Eine weitere Ausnehmung oder Nut gestattet die Halterung von Trennwänden, um einen Lade- oder Kofferraum eines Pkw zu segmentieren.

Ausgehend hiervon ist es Aufgabe der Erfindung ein verbessertes System zum Verzurren und Sichern von Ladegut, insbesondere in der Ladebucht von Kombi-PKW, zu schaffen.

Diese Aufgabe wird erfindungsgemäß durch die Laderaumabdeckungseinrichtung mit den Merkmalen des Anspruches 1 gelöst.

Eine Laderaumabdeckungseinrichtung ist mit einem Abdeckelement versehen, das die Gestalt einer Rollobahn oder einer Plane eines Raffrollos aufweisen kann. Zum Führen dieses Abdeckelementes beim Übergang von der Offen- in die Schließstellung und umgekehrt sind seitlich der Ladebucht zwei längs der Ladebucht verlaufende Schienen vorgesehen. An wenigstens einer der Schienen sind Verankerungsmittel für ein in der Ladebucht enthaltenes Ladegut ausgebildet.

Zweckmäßigerweise laufen die Führungsschienen über die gesamte Tiefe der Ladebucht durch.

Zu dem Verankerungsmittel gehört eine mit der Schiene einstückige Leiste, die über die Länge der Schiene durchläuft. Die Leiste bildet zusammen mit der Schiene eine Nut, die sich in die Richtung auf die Ladebucht oder von der Ladebucht weg öffnet.

Die Nut ist eine hinterschnittene Nut.

Auf diese Weise wird ein Verankerungsmittel geschaffen, das vom Boden des Laderaums oder der Ladebucht deutlichen beabstandet ist. An diesem Verankerungsmittel lassen sich nun wegen des Abstandes zum Boden auch Tüten, Taschen und dergleichen einhängen.

Wenn derartige Verankerungsmittel auf beiden Seiten des Fahrzeugs vorhanden sind, besteht die Möglichkeit, den Laderaum unterhalb der Fensterkante in Querrichtung zu unterteilen. Hierzu können gegebenenfalls noch weitere Schienen im Boden des Fahrzeugs verwendet werden, wie dies bereits an sich bekannt ist.

Die Schienen können für das Abdeckelement in der bereits bekannten Weise mit den hinterschnittenen Führungsnuten ausgestattet sein, oder auch als einfaches, nach oben offenes Profil, das lediglich eine glatte, schmale Führungsbahn bildet, aus dem das Auszugsprofil für das Abdeckelement jederzeit nach oben aushebbar ist.

Das Verankerungsmittel kann ein Verzurrglied umfassen, das mit der Leiste oder der Nut verstellbar verbunden ist. Hierbei kann es sich um eine Verzurröse oder einen Verzurrhaken handeln.

Zweckmäßigerweise ist das Verzurrglied mit einer Bremseinrichtung versehen, die verhindert, dass das Verzurrglied längs der Schiene bewegt wird, wenn Beschleunigungs- oder Bremskräfte in Längsrichtung der Schiene auf das Ladegut einwirken. Die Bremseinrichtung kann von einem elastomeren Stück gebildet sein oder eine Exzenterklemmeinrichtung umfassen.

Im Übrigen sind Weiterbildungen der Erfindung Gegenstand von Unteransprüchen.

Beim Lesen der Figurenbeschreibung wird ferner klar, dass eine Reihe von Abwandlungen möglich sind.

In der Zeichnung von Ausführungsbeispiele des Gegenstandes der Erfindung dargestellt. Es zeigen:
- Fig. 1: eine Heckpartie eines Kombi-PKW unter Veranschaulichung der neuen Laderaumabdeckungseinrichtung, in einer aufgebrochenen perspektivischen Darstellung,
- Fig. 2: die Führungsschiene der Laderaumabdeckeinrichtung nach Fig. 1, in einer vergrößerten perspektivischen Darstellung,
- Fig. 3 und 4: ein erfindungsgemäßes Ausführungsbeispiel für die Schiene der Laderaumabdeckungseinrichtung nach Fig. 1 mit einem von unten einsetzbaren Verankerungsglied und
- Fig. 5 und 6: ein weiteres erfindungsgemäßes Ausführungsbeispiel der Führungsschiene der Laderaumabdeckeinrichtung nach Fig. 1, mit einem Verankerungsglied mit Exzenterspannung.

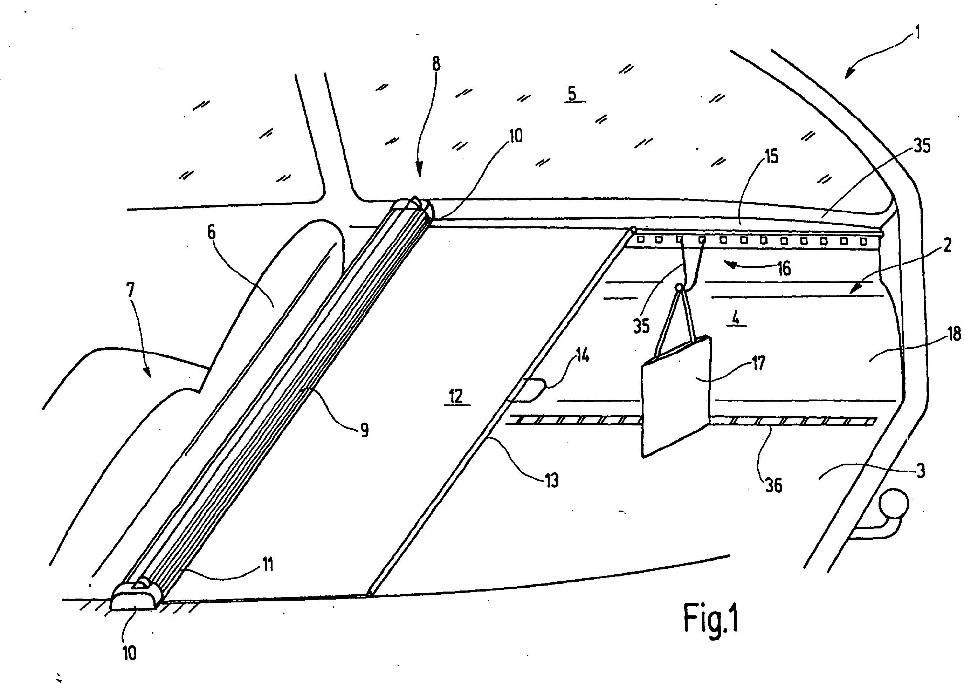

In Fig. 1 ist die aufgebrochen dargestellte Heckpartie 1 eines Kombi-Kraftfahrzeuges oder Personenkraftwagens perspektivisch veranschaulicht. Es ist ein Laderaum oder eine Ladebucht 2 zu erkennen, die von einem Boden 3 sowie zwei Seitenwänden begrenzt, von denen nur die rechte Seitenwand 4 erkennbar ist. Über der Seitenwand 4 befindet sich ein hinteres Seitenfenster 5. Der Abschluss nach vorne der Ladebucht 2 bildet eine Rücksitzlehne 6 einer Rücksitzbank 7.

Zum Abdecken der Ladebucht 2 nach oben ist ein Abdeckrollo 8 vorgesehen. Zu dem Abdeckrollo 8 gehört eine Kassette 9, die sich über die Breite der Ladebucht 2 hinter der Rücksitzlehne 6 erstreckt. Die Kassette 9 liegt in Aufnahmetaschen 10, die in der Fensterleibung des hinteren Seitenfesters 5 vorhanden sind. Die Kassette 9 öffnet sich an einem Auszugsschlitz 11 in Richtung auf die hintere Hecköffnung der Ladebucht 2. Innerhalb der Kassette 9 ist in der üblichen Weise eine nicht erkennbare Wickelwelle drehbar gelagert, an der mit einer Kante eine Rollobahn 12 befestigt ist.

Mittels eines nicht dargestellten Federmotors wird die Wickelwelle im Sinne des Aufwickelns der Rollobahn 2 auf die Wickelwelle vorgespannt.

Um die Rollobahn 2 entgegen der Wirkung des Federmotors abzuziehen, ist an dem freien Ende der Rollobahn ein Auszugsprofil 13 mit einem Handgriff 14 vorhanden.

Zu dem Abdeckrollo 8 gehören ferner zwei Führungsschienen, die unterhalb der Leibung des hinteren Seitenfensters 5 angeordnet sind. Wegen der abgeschnittenen Darstellung ist lediglich die Führungsschiene 15 zu erkennen. Diese Führungsschiene 15 erstreckt sich, wie die spiegelbildlich angeordnete, nicht sichtbare, Führungsschiene, auf der linken Fahrzeugseite von der Kassette 9 bis zu der hinteren Heckklappenöffnung des Kraftfahrzeuges. Sie verläuft etwa horizontal und ist gerade.

Die Führungsschiene 15 weist außerdem Verankerungsmittel 16 auf, mit deren Hilfe Ladegut, beispielsweise eine Einkaufstasche 17, in der Ladebucht 2 zu verankern ist.

Die Fhrungsschienen 15 sind in seitlichen Innenverkleidungsteilen 18 integriert, die sich unterhalb der Fensterunterkante bis zu dem Boden 3 erstrecken.

Die Funktionsweise der Laderaumabdeckeinrichtung 8 braucht ansonsten nicht weiter erläutert zu werden, da sie für sich genommen, bekannt ist.

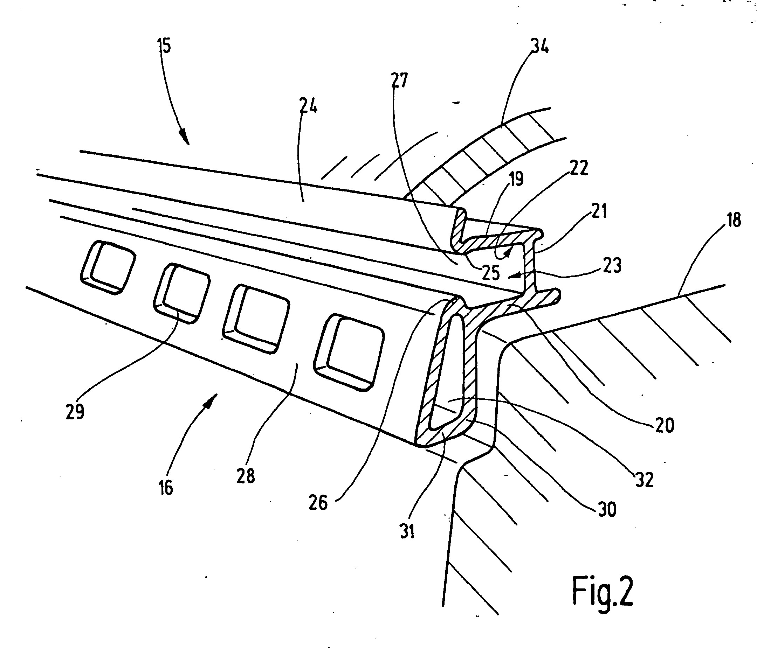

Fig. 2 zeigt in einer vergrößerten perspektivischen Darstellung die Führungsschiene 15. Sie besteht aus einem Aluminiumstrangpressprofil, das beispielsweise geeignet eloxiert ist.

Die Führungsschiene 15 weist zwei parallel zueinander verlaufende Profilabschnitte 19 und 20 auf, die durch einen rechtwinklig dazu verlaufenden Profilabschnitt 21 miteinander verbunden sind. Diese Profilabschnitte 19, 20 und 21 bilden eine Nutenkammer 22 einer Führungsnut 23, in der das Auszugsprofil 13 gleitet.

An seinem freien Ende ist der Profilabschnitt 19 mit einer nach oben aufragenden Leiste 24 versehen, wobei an der Übergangsstelle zwischen der Leiste 24 und dem Profilabschnitt 19 eine Rippe 25 entsteht, die gegenüber dem Profilabschnitt 19, wie gezeigt, nach unten vorspringt.

Der untere Profilabschnitt 20 ist an seinem freien Ende mit einem nach oben aufragenden Rippe 26 versehen, die zusammen mit der Rippe 25 einen Nutenschlitz 27 der Führungsnut 23 bildet. Auf diese Weise entsteht eine hinterschnittene Nut zur Führung des Auszugsprofils 13, da die Breite des Nutschlitzes 27 kleiner ist als die Weite der Nutenkammer 23, gemessen in der vertikalen Richtung.

An die Rippe 26 schließt sich eine nach unten führende Leiste 28 an, die in regelmäßigen Abstand Verankerungsöffnungen 29 enthält.

Um die Leiste 28 auszusteifen, ist eine Stützleite 30 angeformt die von der Unterseite des unteren Profilabschnittes 20 in der Nähe der Rippe 26 ausgeht. Von dieser Stelle führt sie zunächst vertikal nach unten und geht am unteren freien Ende in einen Schenkel 31 über, dessen freies Ende mit der Unterkante der Leiste 28 verbunden ist. Die Leiste 28 und die Stützleiste 30 bilden einen Hohlraum 32 mit dreieckförmigem Querschnitt, der über die Länge der Führungsschiene 15 durchläuft.

Die Führungsschiene 15 liegt auf dem unteren Innenverkleidungsteil 18 auf, das entsprechen konturiert ist. Von der Oberseite der Führungsschiene 15 geht ein weiteres Innenverkleidungsteil 34 aus, das an der Leiste 24 beginnt und bis zu dem Fenster 5 reicht.

Die Verankerung der Führungsschiene 15 ist nicht weiter gezeigt, denn es versteht sich, dass die die Führungsschiene an der Blechkarosserie stabil befestigt ist um die auftretenden Kräfte in die Karosserie einleiten zu können.

Die Öffnungen 29 der Leiste 16 wirken als Verankerungsglieder, in die weitere Verankerungsglieder, beispielsweise in Gestalt von Bügeln 35 eingehängt werden können. Mit Hilfe dieser auskragenden Bügel 35, die sich etwa auf der Höhe der Unterkante der Seitenscheibe 5 befinden, können Taschen oder Beutel 17 mit ihrem Henkel freihängend aufbewahrt werden. Durch diese Bügel werden die Tüten, Beutel oder Taschen 17 daran gehindert, sich frei in der Ladebucht 2 hin und her bewegen zu können, wenn sie aufgrund der Fahrbewegung des Kraftfahrzeuges Beschleunigungskräften ausgesetzt sind. Die Verankerungsmittel sorgen dafür, dass das daran befestigte Ladegut lediglich eine begrenzte Bewegungsfreiheit innerhalb der Ladebucht 2 hat.

Da die Öffnungen 29, die im gezeigten Ausführungsbeispiel etwa quadratisch gestaltet sind, in den dahinter befindlichen Hohlraum 32 münden, können geeignete Aufhängebügel 35, wie der in Fig. 1 gezeigt, in den Öffnungen 98 verhakt werden.

Da sich zwei Führungsschienen 15, wie sie in Fig. 2 gezeigt sind, bezüglich in der Ladebucht 2 gegenüber befinden, besteht die Möglichkeit, zwischen ihnen Netze zu spannen. Die Unterkante eines solchen Netzes kann in eine im Boden 3 der Ladebucht 2 angeordnete Verankerungsschiene 36 festgelegt sein. Die Verankerungsschiene 36 hat eine leiternähnliche Gestalt.

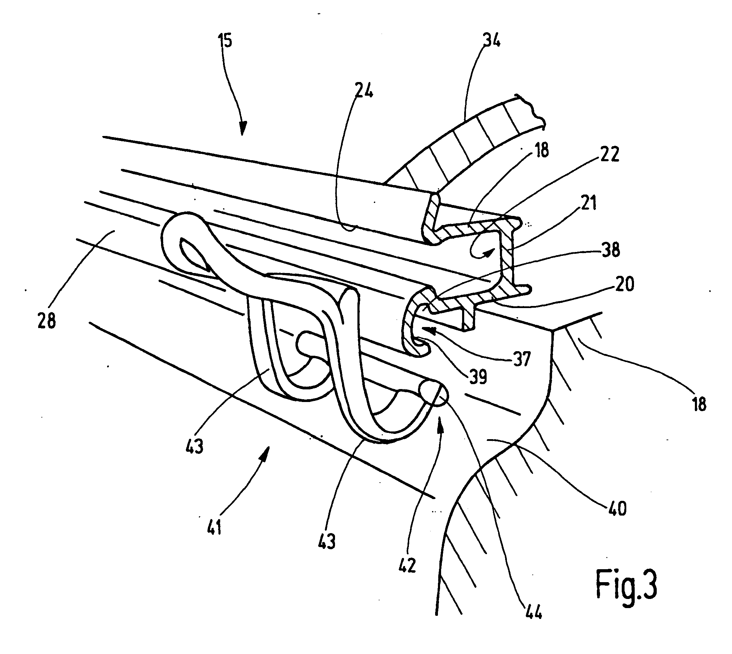

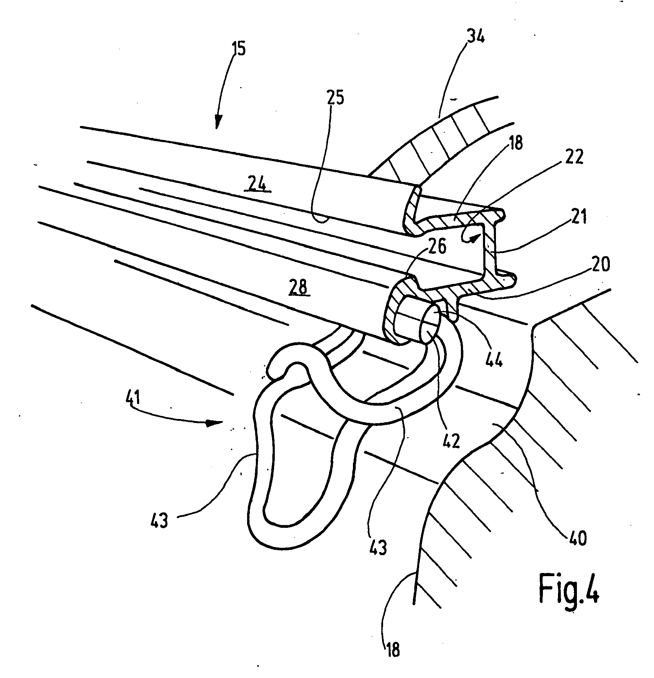

Die Fig. 3 und 4 zeigen ein anderes Ausführungsbeispiel für das Verankerungsmittel 16. Während bei dem Verankerungsmittel 16 nach den Fig. 1 und 2 diskrete Verankerungspositionen durch die Öffnungen 29 vorgegeben sind, ist bei der Ausführungsform nach den Fig. 3 und 4 eine kontinuierliche Verstellbarkeit gegeben.

Zur Erläuterung der Fig. 3 und 4 werden dieselben Bezugszeichen verwendet, wie bei dem Ausführungsbeispiel nach den Fig. 1 und 2, soweit es sich um homologe oder funktionsgleiche oder -ähnliche Strukturen oder Bauelemente handelt.

Die bereits erläuterte Leiste 28 ist bei dem Ausführungsbeispiel nach den Fig. 3 und 4, wie gezeigt, zur Fahrzeugseite nach außen und einwärts gekrümmt, wodurch an der Rückseite der Leiste 28 eine nach hinten offene Nut 37 entsteht, die sich ebenfalls wieder aus einer Nutenkammer 38 und einem Nutenschlitz 39 zusammensetzt. Die Weite der Nutenkammer 38 ist größer als die Weite des Schlitzes 39, der sich in Richtung von der Laderaumbucht 2 weg in Richtung zu der Außenseite des Fahrzeugs öffnet. Damit ist die Nut 37 nicht zu der Ladebuch hin offen.

Der Nutenschlitz 37 ist somit verdeckt. Um dennoch Zugang zu der Nut 37 zu erhalten, weist das Innenverkleidungsteil 18 unterhalb der Führungsschiene 15 eine Stufe 40 auf, die im Abstand zu der Unterseite der Führungsschiene 15 verläuft. Hierdurch entsteht unterhalb der Führungsschiene 15 ein Spalt, durch den hindurch, ein in der Fig. 3 veranschaulichte Verzurröse 41 eingeführt werden kann.

Zu der Verzurröse 41 gehört ein Tragglied 42, das die Form eines Stabes aufweist. Von dem Tragglied 42 gehen an beiden Enden geschwungene Schenkel 43 aus, die sich an dem von dem Tragglied 42 abliegenden Ende zu zwei Ösen vereinigen, wie dies Fig. 4 erkennen lässt. Die Länge des Tragglieds 42 ist etwas größer als die Breite der Ösen. Eine der beiden Ösen steht im Gebrauchszustand etwas nach oben und bildet gleichzeitig einen Haken, während die andere Öse über die Kante der Stufe 40 des Innenverkleidungsteils 18 nach unten hängt.

Um ein Verrutschen der Verzurröse 41 längs der Nut 37 zu verhindern, ist das Tragglied 42 bei 44 mit einem elastomeren Belag versehen. Der Gesamtquerschnitt des Traggliedes einschließlich der elastomeren Beschichtung 44 verleiht dem Tragglied eine etwa ovale oder elliptische Gestalt, die an die Gestalt der Nutenkammer 38 angepasst ist.

Zum Einhängen der Verzurröse 41 wird die Verzurröse in der in Fig. 3 gezeigten Position, in der die eigentlichen Ösen nach oben stehen, mit dem Tragglied 42 voraus durch den Spalt zwischen der Schulter 44 und der Unterseite der Führungsschiene 15 eingeführt. Sodann wird das ovale Tragglied 42 mit dem nichtbeschichteten Teil voraus durch den Schlitz 39 in die Nutenkammer 38 eingeführt. Die kurze Achse des Querschnitts des Tragglieds 42 ist kleiner als die Breite des Schlitzes 39. Anschließend wird die Verzurröse 41 um eine durch die Längsachse des Tragglieds 42 definierter Achse nach unten geschwenkt, wodurch der mit der elastomeren Beschichtung 44 versehene Abschnitt in die Nutenkammer 38 hinein gelangt. Die elastomere Beschichtung 44 ist in der Wandstärke so bemessen, dass sich das Tragglied 42 innerhalb der Nutenkammer 38 verklemmt. Die hohe Reibung, die die elastomere Beschichtung 44 innerhalb der Nutenkammer 38 zeigt, verhindert, dass das Tragglied 42 längs der Nut 37 gleiten kann.

Sobald an den freien Enden der Verzurröse 41 eine Kraft angreift, die in Richtung parallel zu der Führungsschiene 15 wirkt, verstärkt die hierdurch hervorgerufene Kippkraft den Reibschluss des Traggliedes 42 innerhalb der Nutenkammer 38. Es kommt zu einem Effekt wie er auftritt, wenn sich eine Schublade in einer Führung verklemmt. Hierbei tritt eine Selbstverstärkung auf in dem Sinne, dass mit Erhöhung der angreifenden Kraft auch die Reibschlusskraft verstärkt wird.

Die Verzurröse 41 ist damit daran gehindert, in Längsrichtung der Führungsnut 37 zu gleiten. Die elastomere Beschichtung 44 liefert lediglich die initiale Reibkraft, damit auch unter der Einwirkung von Erschütterungen die Verzurröse 41 auf keinen Fall in Längsrichtung der Nut 37 wandern kann.

Zum Verschieben oder Herausnehmen muss der Benutzer die Verzurröse aus der Stellung nach Fig. 4 wieder nach oben schwenken, bis die elastomere Beschichtung 44, die sich über die Länge des Traggliedes 42 fortsetzt, in Richtung auf den Nutenschlitz 39 zeigt. Damit ist die Blockade aufgehoben und die Verzurröse 41 lässt sich versetzen. An der gewünschten Zielposition wird sie durch Herunterschwenken wieder verankert.

Aus der Funktionsbeschreibung ergibt sich auch an welcher Stelle die elastomere Beschichtung 44 angeordnet sein muss: Sie befindet sich bei geklemmter Verzurröse 41 an jener Stelle, die bei dem Tragglied 42 nach oben zeigt, womit die Unterseite des Traggliedes, die auf der in Fig. 3 unteren Bereich der Wand der Kammer 37 aufliegt, einen rein metallischen Kontakt liefert, der nicht nachgibt.

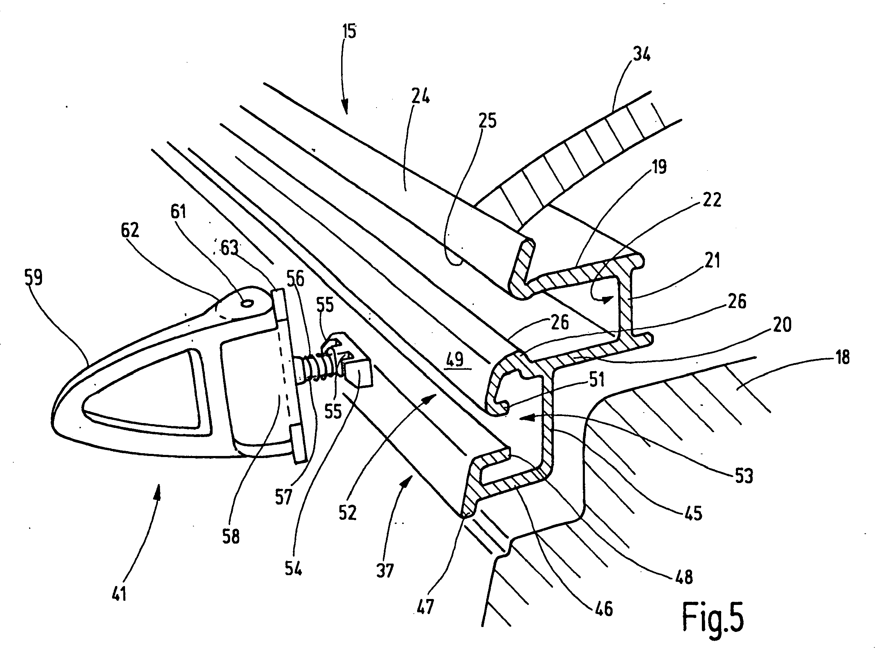

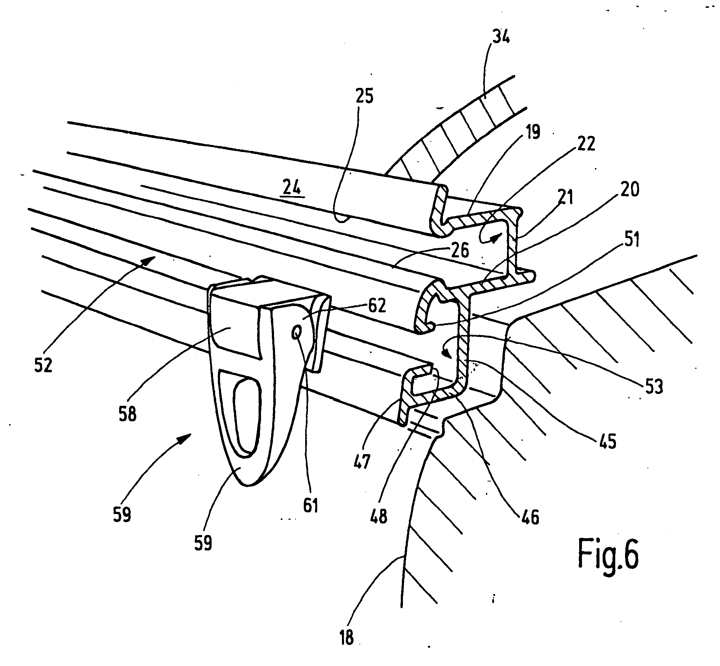

Die Figuren 5 und 6 zeigen ein weiteres Ausführungsbeispiel der erfindungsgemäßen Anordnung. Während bei dem vorigen Ausführungsbeispiel die Verriegelung oder Verklemmung der Verzurröse 41 durch Schwenken derselben innerhalb der Führungsnut 37 erfolgte, sieht das Ausführungsbeispiel nach den Fig. 5 und 6 eine Exzenterspannung vor.

Die Führungsschiene 15, die im Bereich des Führungsprofils für das Auszugsprofil 13 in der gleichen Weise gestaltet ist wie bei dem Ausführungsbeispiel nach den Fig. 3 und 4 bzw. dem Ausführungsbeispiel nach Fig. 2, weist nunmehr eine unterhalb des Profilabschnitts 20 vorgesehene Anordnung auf, die eine nach vorne offene Nut 37 bildet. Hierzu geht unterhalb des unteren Profilabschnitts 20 ein Steg 45 nach unten weg, dessen freies Ende in einen horizontal verlaufenden Schenkel 46 übergeht. Dessen freies Ende ist mit einem L-förmigen Profil 47 versehen, das eine innen liegende Kante 48 bildet.

Im oberen Teil geht die Rippe 26 in eine Leiste 49 über, die ein ähnliches Profil aufweist, wie die Leiste 28 nach Fig. 3. Auch hierdurch entsteht wiederum eine nach innen zeigende Kante 51, die parallel und im Abstand zu der Kante 48 läuft. Zwischen den beiden Kanten 48 und 51, wird ein Nutenschlitz 52 begrenzt, der den Zugang zu einer Nutenkammer 53 freigibt.

Wie gezeigt, ist die Führungsnut 37 bei dem Ausführungsbeispiel nach den Fig. 5 und 6 zur Ladebucht 2 hin offen. Dies ermöglicht es, das Innenverkeidungsteil 18 bis unmittelbar an den Schenkel 46 der Führungsschiene 15 heranbringen zu können.

Zu der Verzurröse 41 gehört ein Nutenstein 54 mit zwei parallel zueinander verlaufenden Nuten 55, die im eingesetzten Zustand die beiden Kanten 58 und 41 übergreifen. Mittels eine Schraubendruckfeder 56, die einen Stößel 57 konzentrisch umgibt, wird Nutenstein 54 federelastisch von einem Grundkörper 58 weg vorgespannt. De Stößel sitzt mittig auf dem Nutenstein 54. An dem Grundkörper 58 ist ein Ösenglied 59 anscharniert. Zur Verbindung des Ösenglieds 59 mit dem Grundkörper 58 ist eine Scharnierachse 61 vorgesehen. Die Scharnierachse 61 führt durch eine in dem Grundkörper 58 befindliche Bohrung des Stößels 57.

Das Ösenglied 59 weist auf der Seite des Grundkörpers 58 zwei parallel mit Abstand nebeneinander verlaufende Exzenterlaschen 62 auf, die sich an Fortsätzen 63 des Grundkörpers 58 abstützen können.

Die Funktionsweise der Verzurröse 41 im Zusammenspiel mit der Führungsschiene 50 ergibt sich aus einer Zusammenschau der Fig. 5 und 6:

In der in Fig. 5 gezeigten Stellung wird der T-Nutenstein 54 durch den Nutenschlitz 52 eingeführt. Sodann wird die gesamte Anordnung um eine durch den Stößel 57 definierte Achse um 90° gedreht, bis die Nuten 55 mit den Kanten 51 und 48 fluchten. Nunmehr wird das Ösenglied 49 um die hierzu horizontal verlaufende Scharnierachse 61 nach unten geschwenkt, in die Stellung nach Fig. 5. Die Exzenterlaschen 62 schieben dabei die Scharnierachse 61 von den Fortsätzen 62 in Richtung von der Führungsschiene 15 weg. Bei dieser Bewegung wird der Stößel 57 in das Gehäuse 58 hineingezogen, womit sich der T-Nutenstein 54 mit den Nuten 55 auf den Stirnkanten 48 und 51 verklemmt.

Zum Herausnehmen wird die Sache in der umgekehrten Richtung bewegt.

Eine Laderaumabdeckung weist für die Rollobahn oder Rolloplane seitliche Führungsschienen auf. Diese Führungsschienen sind zusätzlich mit Verankerungsmittel versehen, um Ladegut in dem Laderaum soweit festlegen zu können, dass das Ladegut lediglich eine begrenzte Bewegung in dem Laderaum vollführen kann.

## Patentansprüche

1. Laderaumabdeckungseinrichtung (8) für Kraftfahrzeuge, um eine in einem Kraftfahrzeug enthaltene Ladebucht (2) nach oben optisch zu verschließen,
mit einem Abdeckelement (12), das aus einer die Ladebucht (2) verschließenden Stellung in eine Stellung bringbar ist, in der die Ladebucht (2) von oben zumindest zum Teil zugänglich ist,
mit zwei längs der Ladebucht (2) verlaufenden Schienen (15), die dazu eingerichtet sind das Abdeckelement (12) in der Stellung zu halten, in der die Ladebucht (2) optisch verschlossen ist, wozu jede Schiene (15) eine Nut (23) enthält, und
mit wenigstens einer in wenigstens einer der Schienen (15) vorgesehenen Nut (37,53) als Verankerungsmittel (16) für wenigstens ein in der Ladebucht (2) enthaltenes Ladegut (17), wobei die weitere Nut (37,53) eine hinterschnittene Nut ist.

2. Einrichtung nach Anspruch 1, **dadurch gekennzeichnet, dass** die beiden Schienen (15) unterschiedliche Querschnittsprofile aufweisen.

3. Einrichtung nach Anspruch 1, **dadurch gekennzeichnet, dass** die Schienen (15) über die Länge der Ladebucht (2) durchlaufen.

4. Einrichtung nach Anspruch 1, **dadurch gekennzeichnet, dass** die beiden Schienen (15) gleiche Querschnittsprofile aufweisen.

5. Einrichtung nach Anspruch 1, **dadurch gekennzeichnet, dass** wenigstens eine der Schienen (15) ein nach oben offenes Führungsprofil für das Abdeckelement (2) bildet.

6. Einrichtung nach Anspruch 1, **dadurch gekennzeichnet, dass** das Verankerungsmittel (16) wenigstens ein örtlich begrenztes Verzurrglied (29) umfasst.

7. Einrichtung nach Anspruch 1, **dadurch gekennzeichnet, dass** sich die weitere Nut (53) in Richtung auf die Ladebucht (2) öffnet.

8. Einrichtung nach Anspruch 1, **dadurch gekennzeichnet, dass** sich die weitere Nut (37) in Richtung von der Ladebucht (2) weg öffnet.

9. Einrichtung nach Anspruch 1, **dadurch gekennzeichnet, dass** zu dem Verankerungsmittel (16) ein Verzurrglied (41) gehört, das mit der Leiste (28) oder der Nut (37,53) verstellbar verbunden ist.

10. Einrichtung nach Anspruch 9, **dadurch gekennzeichnet, dass** das Verzurrglied (41) eine Verzurröse oder ein Verzurrhaken ist.

11. Einrichtung nach Anspruch 9, **dadurch gekennzeichnet, dass** das Verzurrglied (41) mit einer Bremseinrichtung (44,54) versehe ist.

12. Einrichtung nach Anspruch 11, **dadurch gekennzeichnet, dass** die Bremseinrichtung ein elastomeres Stück oder eine elastomere Beschichtung (44) umfasst.

13. Einrichtung nach Anspruch 1, **dadurch gekennzeichnet, dass** die Bremseinrichtung eine Exzenterklemeinrichtung (54) umfasst.

## Claims

1. Luggage area covering arrangement (8) for motor vehicles for closing off a luggage compartment (2) contained in a motor vehicle from view from above, with a covering element (12), which can be moved out of a position closing the luggage compartment (2) into a position, in which the luggage compartment (2) is at least partially accessible from above,
with two rails (15), which run along the luggage compartment (2) and are arranged to hold the covering element (12) in the position, in which the luggage compartment (2) is closed off from view, for which purpose each rail (15) includes a groove (23), and
with at least one groove (37, 53) provided in at least one of the rails (15) as anchoring element (16) for at least one luggage item (17) contained in the luggage compartment (2), wherein the further groove (37, 53) is an undercut groove.

2. Arrangement according to Claim 1, **characterised in that** the two rails (15) have different cross-sectional profiles.

3. Arrangement according to Claim 1, **characterised in that** the rails (15) extend over the length of the luggage compartment (2).

4. Arrangement according to Claim 1, **characterised in that** the two rails (15) have the same cross-sectional profiles.

5. Arrangement according to Claim 1, **characterised in that** at least one of the rails (15) forms an upwardly open guide profile for the covering element (12).

6. Arrangement according to Claim 1, **characterised in that** the anchoring element (16) comprises at least one locally restricted locking element (29).

7. Arrangement according to Claim 1, **characterised in that** the further groove (53) opens towards the luggage compartment (2).

8. Arrangement according to Claim 1, **characterised in that** the further groove (37) opens away from the luggage compartment (2).

9. Arrangement according to Claim 1, **characterised in that** the anchoring element (16) includes a locking element (41), which is adjustably connected to the strip (28) or the groove (37, 53).

10. Arrangement according to Claim 9, **characterised in that** the locking element (41) is a securing eye or a locking hook.

11. Arrangement according to Claim 9, **characterised in that** the locking element (41) is provided with a brake means (44, 54).

12. Arrangement according to Claim 11, **characterised in that** the brake means comprises an elastomer piece or an elastomer coating (44).

13. Arrangement according to Claim 1, **characterised in that** the brake means comprises an eccentric clamping means (54).

## Revendications

1. Dispositif (8) de recouvrement de coffre à bagages pour véhicules automobiles, destiné à masquer optiquement un espace à bagages (2) prévu dans un véhicule automobile, comprenant
- un élément de recouvrement (12) qui peut être amené d'une position, dans laquelle il ferme l'espace à bagages (2), dans une position dans laquelle l'espace à bagages (2) est accessible d'en haut, au moins en partie,
- deux rails (15) qui s'étendent le long de l'espace à bagages (2) et sont conçus pour maintenir l'élément de recouvrement (12) dans la position dans laquelle l'espace à bagages (2) est masqué optiquement, chaque rail (15) comportant à cet effet une rainure (23), et
- au moins une rainure (37, 53) qui est prévue dans au moins l'un des rails (15), en tant que moyen d'ancrage (16) pour au moins un objet de chargement (17) contenu dans l'espace à bagages (2), la rainure (37, 53) supplémentaire étant une rainure réalisée en contre-dépouille.

2. Dispositif selon la revendication 1, **caractérisé par le fait que** les deux rails (15) présentent des profils différents.

3. Dispositif selon la revendication 1, **caractérisé par le fait que** les rails (15) s'étendent sur toute la longueur de l'espace à bagages (2).

4. Dispositif selon la revendication 1, **caractérisé par le fait que** les deux rails (15) présentent des profils identiques.

5. Dispositif selon la revendication 1, **caractérisé par le fait qu'**au moins un des rails (15) forme un profilé de guidage ouvert vers le haut pour l'élément de recouvrement (2).

6. Dispositif selon la revendication 1, **caractérisé par le fait que** le moyen d'ancrage (16) comprend au moins un élément d'arrimage (29) délimité localement.

7. Dispositif selon la revendication 1, **caractérisé par le fait que** la rainure (53) supplémentaire s'ouvre en direction de l'espace à bagages (2).

8. Dispositif selon la revendication 1, **caractérisé par le fait que** la rainure (37) supplémentaire s'ouvre dans la direction opposée à l'espace à bagages (2).

9. Dispositif selon la revendication 1, **caractérisé par le fait que** le moyen d'ancrage (16) comprend un élément d'arrimage (41) qui est relié de manière réglable à la baguette (28) ou à la rainure (37, 53).

10. Dispositif selon la revendication 9, **caractérisé par le fait que** l'élément d'arrimage (41) est un oeillet d'arrimage ou un crochet d'arrimage.

11. Dispositif selon la revendication 9, **caractérisé par le fait que** l'élément d'arrimage (41) est pourvu d'un moyen de freinage (44, 54).

12. Dispositif selon la revendication 11, **caractérisé par le fait que** le moyen de freinage comprend une pièce élastomère ou un revêtement élastomère (44).

13. Dispositif selon la revendication 1, **caractérisé par le fait que** le moyen de freinage comprend un système de serrage excentrique (54).
